(19) Europäisches Patentamt
European Patent Office
Office européen des brevets

(11) **EP 3 521 947 A1**

(12) **EUROPÄISCHE PATENTANMELDUNG**

(43) Veröffentlichungstag:
**07.08.2019 Patentblatt 2019/32**

(51) Int Cl.:
***G05B 13/04*** *(2006.01)*

(21) Anmeldenummer: **18155284.5**

(22) Anmeldetag: **06.02.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft**
**80333 München (DE)**

(72) Erfinder:
- **Baumgärtner, Thomas**
  **91056 Erlangen (DE)**
- **Teichert, Ivonne**
  **91792 Ellingen (DE)**
- **Baumgärtner, Agnes**
  **91056 Erlangen (DE)**

(54) **ENERGIEMANAGEMENTVERFAHREN**

(57) Es wird ein Verfahren zum Ermitteln eines Prognosewertes einer zeitabhängigen Ausgangsgröße, insbesondere zur Regelung oder Steuerung eines Energiesystems, für einen Prognosezeitpunkt, vorgeschlagen, das wenigstens folgende Schritte umfasst:
- Bereitstellen von Werten der zeitabhängigen Ausgangsgröße für in Bezug auf den Prognosezeitpunkt vergangene Zeitpunkte;
- Bereitstellen von Werten wenigstens einer zeitabhängigen Eingangsgröße für den Prognosezeitpunkt und/oder für in Bezug auf den Prognosezeitpunkt vergangene Zeitpunkte;
- Festlegen eines mathematischen Modells mittels einer Mehrzahl von Modellparametern, mittels der Eingangsgröße und/oder mittels der Ausgangsgröße, sowie mittels einer Mehrzahl von Binärvariablen; wobei
- den Werten der Eingangsgröße und den Werten der Ausgangsgröße jeweils eine der Binärvariablen derart zugeordnet wird, dass der zugehörige Wert der Eingangsgröße oder der zugehörige Wert der Ausgangsgröße zum mathematischen Modell beiträgt, falls die zugeordnete Binärvariable den Wert Eins aufweist; und
- Minimieren eines Modellfehlers des mathematischen Modells, wobei durch das Minimieren der Prognosewert der Ausgangsgröße berechnet, sowie die Werte der Modellparameter und die Werte der Binärvariablen ermittelt werden.
Weiterhin betrifft die Erfindung ein Energiemanagementsystem.

FIG 1

**Beschreibung**

Die Erfindung betrifft ein Verfahren zum Ermitteln eines Prognosewertes einer zeitabhängigen Ausgangsgröße, beispielsweise einer Last, insbesondere eines Energiesystems, beispielsweise eines Gebäudes, für einen Prognosezeitpunkt. Weiterhin betrifft die Erfindung ein Energiemanagementsystem, das zur Durchführung des erfindungsgemäßen Verfahrens ausgebildet ist.

Eine Vielzahl von Gebäuden, insbesondere kommerzielle oder industrielle Gebäude, umfassen ein Gebäudeautomationssystem (englisch: Building Automation System; abgekürzt BAS). Das Gebäudeautomationssystem umfasst die Elemente der Gebäudeinfrastruktur, beispielsweise elektrochemische Speicher, insbesondere Batterien, Wärmepumpen und/oder thermische Speicher. Weiterhin weist ein Gebäudeautomationssystem typischerweise mehrere verschiedene abstrakte Ebenen auf, insbesondere eine Managementebene, eine Automationsebene und eine Feldebene.

In der Managementebene werden übergeordnete Funktionen des Gebäudeautomationssystems, beispielsweise eine Visualisierung der Gebäudeinfrastruktur, erzeugt und gegebenfalls für einen Benutzer oder einen Betreiber des Gebäudes bereitgestellt oder dargestellt. Die Automationsebene führt einzelne Komponenten der Infrastruktur zusammen und regelt oder steuert beispielsweise Gruppen von Komponenten. Auf der Feldebene werden die Komponenten der Gebäudeinfrastruktur mit dem Gebäudeautomatisierungssystem verbunden.

Nach dem Stand der Technik können Gebäudeautomationssysteme ein Energiemanagementsystem (englisch: Building Energy Management System; abgekürzt BEMS) umfassen. Hierbei sind wesentliche Aufgaben des Energiemanagementsystems eine energieeffiziente Regelung oder Steuerung der Komponenten der Gebäudeinfrastruktur, ein Schutz der Komponenten der Gebäudeinfrastruktur, sowie eine Bereitstellung eines angeforderten Komforts, beispielsweise mittels einer Regelung einer Raumtemperatur eines Raumes des Gebäudes.

Aktuell werden neue Anforderungen an ein Energiemanagementsystem beziehungsweise an ein Energiemanagementverfahren gestellt. Beispiele für solche neuen Anforderungen sind eine Reduktion von Treibhausemissionen und eine Nachhaltigkeitszertifizierung, beispielsweise gemäß den Standards von Führerschaft in energie- und umweltgerechter Planung (englisch: Leadership in Energy and Environmental Design; abgekürzt: LEED) oder gemäß Energy Star.

Eine der wesentlichen Aufgaben eines Energiemanagementsystems für ein Gebäude ist eine Koordination von einer gebäudeinternen Erzeugung einer Energieform und einem gebäudeinternen Verbrauch der Energieform. Energieformen können thermische Energie, insbesondere Wärme oder Kälte, elektrische Energie oder chemische Energie sein. Insbesondere für erneuerbar erzeugte Energieformen, beispielsweise mittels Photovoltaikanlagen, Energiespeicher und/oder mittels regelbaren oder steuerbaren Lasten, beispielsweise ein Laden von Elektrofahrzeugen, ist eine Regelung oder Steuerung mittels eines Energiemanagementsystems, das heißt ein Energiemanagementverfahren, vorteilhaft.

Weiterhin kann ein Energiemanagementsystem elektrische Messungen, eine Überwachung der Gebäudeinfrastruktur sowie ein Datenanalyseverfahren und/oder ein Prognoseverfahren umfassen.

Weiterhin ermöglicht eine entsprechend ausgestaltete Gebäudeinfrastruktur mittels elektrischer und thermischer Energiespeicher sowie mittels verschiebbarer Lasten, beispielsweise ein Laden von Elektrofahrzeugen, oder mittels regelbaren oder steuerbaren Energieerzeugern, beispielsweise Blockheizkraftwerke (abgekürzt BHKW), eine Flexibilität bezüglich des Leistungsbedarfes des Gebäudes an seinem Netzanschluss. Hierbei regelt oder steuert das Energiemanagementsystem die Erzeugung und den Verbrauch der Energieformen, beispielsweise unter einer Berücksichtigung dynamischer Kosten für die Erzeugung oder einen externen Bezug der Energieform.

Weiterhin ermöglicht ein Energiemanagementsystem eine Vorhersage, das heißt eine Prognose eines Lastprofils des Gebäudes, beispielsweise 24 Stunden im Voraus. Hierzu kann ein Planungsmodul des Energiemanagementsystems herangezogen werden. Insbesondere für erneuerbar erzeugte Energieformen (erneuerbare Energien oder erneuerbare Energiequellen) ist eine Prognose schwierig und typischerweise mit großen Unsicherheiten verbunden.

Für eine Prognose kann das Energiemanagementsystem ein Prognoseverfahren umfassen, welches beispielsweise eine Prognose einer Heizlast ermöglicht. Hierbei stellt die Heizlast eine zeitabhängige Ausgangsgröße des Prognoseverfahrens dar, deren Wert für einen zukünftigen Zeitpunkt (Prognosezeitpunkt), gegebenenfalls unter einer Berücksichtigung einer zeitabhängigen Eingangsgröße, beispielsweise einer Außentemperatur, berechnet wird. Zur Vermeidung von Kosten ist hierbei eine Genauigkeit der Prognose von wenigstens 10 Prozent erforderlich. Eine verbesserte Genauigkeit der Prognose erhöht somit die energetische Effizienz des Betriebes des Gebäudes.

Bekannte Prognoseverfahren basieren auf historischen oder vergangenen Messwerten einer physikalischen Eingangsgröße, beispielsweise einer Außentemperatur, und historischen oder vergangenen Messwerten einer Ausgangsgröße, beispielsweise einer Heizlast. Basierend auf den Werten der Eingangsgröße und der Ausgangsgröße wird ein mathematisches Modell bereitgestellt mittels welchem eine Prognose der Ausgangsgröße zu wenigstens einem zukünftigen Zeitpunkt (Prognosewert) ermöglicht wird. Typischerweise weist das mathematische Modell hierbei eine Mehrzahl von Modellparametern auf.

Ein Nachteil bekannter mathematischer Modelle ist, dass für alle Werte der Ausgangsgröße Modellparameter bereitgestellt werden. Dadurch wird die Genauigkeit der Prognose aufgrund einer Überanpassung (englisch: Overfitting) reduziert.

Ein weiterer Nachteil bekannter Prognoseverfahren ist, dass die Modellparameter ihre physikalisch sinnvollen Wertebereiche verlassen können, sodass beispielsweise bei steigender Außentemperatur eine erhöhte Heizlast vorhergesagt wird. Dieser Fall scheint generisch zu sein. Mittels bekannter Prognoseverfahren kann eine solche fehlerhafte Prognose weder erkannt noch korrigiert werden.

Weiterhin können einzelne fehlerhafte Werte der Eingangsgröße und/oder Ausgangsgröße (Messabweichungen) zu einer fehlerhaften Prognose führen, da diese ebenfalls durch bekannte Prognoseverfahren weder erkannt noch korrigiert werden können.

Insgesamt führen die genannten Nachteile bekannter Prognoseverfahren zu einer Reduktion der Genauigkeit der Prognose.

Der vorliegenden Erfindung liegt die Aufgabe zugrunde, ein verbessertes Prognoseverfahren bereitzustellen.

Die Aufgabe wird durch ein Verfahren mit den Merkmalen des unabhängigen Patentanspruches 1 und durch ein Energiemanagementsystem mit den Merkmalen des unabhängigen Patentanspruches 15 gelöst. In den abhängigen Patentansprüchen sind vorteilhafte Ausgestaltungen und Weiterbildungen der Erfindung angegeben.

Das erfindungsgemäße Verfahren zum Ermitteln eines Prognosewertes einer zeitabhängigen Ausgangsgröße für einen Prognosezeitpunkt, insbesondere zur Regelung oder Steuerung eines Energiesystems, umfasst wenigstens die folgenden Schritte:

- Bereitstellen von Werten der zeitabhängigen Ausgangsgröße für in Bezug auf den Prognosezeitpunkt vergangene Zeitpunkte;
- Bereitstellen von Werten wenigstens einer zeitabhängigen Eingangsgröße für den Prognosezeitpunkt und/oder für in Bezug auf den Prognosezeitpunkt vergangene Zeitpunkte;
- Festlegen eines mathematischen Modells mittels einer Mehrzahl von Modellparametern, mittels der Eingangsgröße und/oder mittels der Ausgangsgröße, sowie mittels einer Mehrzahl von Binärvariablen; wobei
- den Werten der Eingangsgröße und den Werten der Ausgangsgröße jeweils eine der Binärvariablen derart zugeordnet wird, dass der zugehörige Wert der Eingangsgröße oder der zugehörige Wert der Ausgangsgröße zum mathematischen Modell beiträgt, falls die zugeordnete Binärvariable den Wert Eins aufweist; und
- Minimieren eines Modellfehlers des mathematischen Modells, wobei durch das Minimieren der Prognosewert der Ausgangsgröße berechnet, sowie die Werte der Modellparameter und die Werte der Binärvariablen ermittelt werden.

Das Verfahren zum Ermitteln des Prognosewertes kann als Prognoseverfahren bezeichnet werden.

Insbesondere ist das erfindungsgemäße Verfahren als Energiemanagementverfahren oder zur Datenanalyse, beispielsweise zur Datenanalyse bei einem Betrieb einer Anlage, vorgesehen. Die vorliegende Erfindung ist besonders bevorzugt für ein Energiemanagementverfahren vorgesehen, das heißt zum Ermitteln eines Prognosewertes einer zeitabhängigen Ausgangsgröße, insbesondere einer Last, für ein Energiesystem, für einen Prognosezeitpunkt.

Eine Binärvariable ist eine Variable, die nur zwei diskrete Werte aufweist, insbesondere die Werte Eins oder Null. Beispielsweise können ebenfalls boolesche Werte vorgesehen sein. Entscheidend ist, dass die Binärvariable einen ersten Wert (hier als Eins bezeichnet) und einen zweiten Wert (hier als Null bezeichnet) aufweist, wobei der erste Wert das Beitragen des zugehörigen Wertes der Eingangsgröße und/oder Ausgangsgröße kennzeichnet. Der zweite Wert kennzeichnet, dass der zugehörige Wert der Eingangsgröße und/oder Ausgangsgröße nicht beiträgt. Ohne eine Beschränkung des Schutzumfanges der vorliegenden Erfindung werden daher die Werte Eins und Null verwendet.

Das Minimieren des Modellfehlers kann mittels mathematischer Beziehungen stets in ein Maximieren übergeführt werden, sodass ohne eine Beschränkung des Schutzumfanges der vorliegenden Erfindung ein Minimieren erfolgt. Weiterhin kann das Minimieren des Modellfehlers als Optimierungsverfahren oder Optimierungsproblem bezeichnet werden.

Die Eingangsgröße und die Ausgangsgröße stellen physikalische Größen dar, sodass die Werte der Eingangsgröße und der Ausgangsgröße beispielsweise Messwerte oder berechnete Werte der entsprechenden physikalischen Größe oder Messgröße sind.

Das erfindungsgemäße Verfahren bildet ein Prognoseverfahren (Prognose-Algorithmus) aus, das den Prognosewert der Ausgangsgröße ermittelt. Eine Mehrzahl von Prognosewerten, die beispielsweise einen Prognosezeitraum bilden, kann vorgesehen sein. Mit anderen Worten stellt das erfindungsgemäße Verfahren wenigstens den Wert der zeitabhängigen Ausgangsgröße (Prognosewert) wenigstens zum Prognosezeitpunkt bereit.

Die Werte der zeitabhängigen Ausgansgröße zu den vergangenen Zeitpunkten können als historische Messdaten vorliegen. Mit anderen Worten werden historische Messdaten der zu vorhersagenden Ausgangsgröße und historische Messdaten der Eingangsgröße zum Ermitteln des Prognosewertes der Ausgangsgröße herangezogen. Die zeitabhängige Ausgangsgröße ist insbesondere eine Last, beispielsweise eine elektrische oder thermische Last, eines Gebäudes. Erfindungsgemäß werden ebenfalls die Modellparameter ermittelt.

Gemäß der vorliegenden Erfindung wird zum Ermitteln des Prognosewertes ein mathematisches Modell verwendet, das eine Mehrzahl von Modellparametern aufweist.

Ein Grundgedanke der vorliegenden Erfindung ist, dass zum mathematischen Modell ausschließlich die Werte der Eingangsgröße und/oder Ausgangsgröße beitragen, deren zugeordnete Binärvariable den Wert Eins aufweist. Mit anderen Worten legt der Wert einer der Binärvariablen fest, ob der zugehörige Wert der Eingangsgröße oder Ausgangsgröße zum mathematischen Modell und somit zum Ermitteln des Prognosewertes beiträgt. Hierbei wird der Wert der Binärvariablen ebenfalls durch das Minimieren des Modellfehlers festgelegt oder ermittelt.

Das Ermitteln des Prognosewertes, der Modellparameter sowie der Werte der Binärvariablen erfolgt mittels eines Minimierens des Modellfehlers des mathematischen Modells. Hierbei ist es besonders bevorzugt, wenn das Minimieren des Modellfehlers mittels eines nummerischen Optimierungsverfahrens erfolgt. Mit anderen Worten wird der Modellfehler für die zu ermittelnden Modellparameter und für die zu ermittelnden Werte der Binärvariablen möglichst klein. Hierbei ist es nicht erforderlich ein exaktes Minimum des Modellfehlers zu ermitteln, sondern lediglich einen bestmöglichen Wert, der dem exakten Minimum, beispielsweise durch ein Festlegen eines Schwellenwertes, ausreichend nahe ist.

Gemäß der vorliegenden Erfindung erfolgt das Ermitteln des Prognosewertes mittels eines gemischt ganzzahligen Optimierungsproblems. Hierbei sind die ganzzahligen Größen die Binärvariablen, die nur die Werte Eins oder Null aufweisen. Weist die einem der Werte der Eingangsgröße zugeordnete Binärvariable beispielsweise den Wert Null auf, so trägt dieser Wert der Eingangsgröße nicht zum mathematischen Modell bei, das heißt der Prognosewert ist nicht von diesem Wert der Eingangsgröße abhängig. Die Zuordnung oder Kopplung einer der Binärvariablen zu einem der Werte der Eingangsgröße oder Ausgangsgröße wird beispielsweise mittels eines Produktes der Binärvariablen mit dem Wert der Eingangsgröße beziehungsweise Ausgangsgröße ermöglicht. Dieses Produkt weist unabhängig vom Wert der zugehörigen Eingangsgröße den Wert Null auf, falls die zugehörige Binärvariable den Wert Null aufweist.

Ein weiterer Grundgedanke der Erfindung ist, dass die Werte der Binärvariablen ein Bestandteil des Optimierungsverfahrens sind. Mit anderen Worten werden diese nicht manuell festgelegt, sondern bezüglich dem Minimieren des Modellfehlers bestmöglich ermittelt. Das Optimierungsverfahren entscheidet in diesem Sinne selbst darüber, welche Werte der Eingangsgröße und/oder Ausgangsgröße zum Prognosewert beitragen, um einen bestmöglichen Prognosewert zu erhalten. Dadurch wird vorteilhafterweise die Genauigkeit des Prognosewertes deutlich verbessert. Das ist insbesondere deshalb der Fall, da dadurch eine Überanpassung vermieden wird.

Das erfindungsgemäße Energiemanagementsystem ist dadurch gekennzeichnet, dass dieses zum Ermitteln eines Prognosewertes einer zeitabhängigen Ausgangsgröße, insbesondere einer Last, eines Energiesystems, insbesondere eines Gebäudes, nach einem Verfahren gemäß der vorliegenden Erfindung und/oder einer ihrer Ausgestaltungen ausgebildet ist.

Vorteilhaftweise weist das erfindungsgemäße Energiemanagementsystem eine verbesserte Genauigkeit bezüglich der Prognose des Prognosewertes der Ausgangsgröße auf. Weiterhin wird dadurch die Flexibilität des Energiemanagementsystems erhöht, sodass eine Teilnahme an einem Regelenergiemarkt verbessert werden kann. Insbesondere weist ein mittels des erfindungsgemäßen Energiemanagementsystems geregeltes oder gesteuertes Energiesystem eine verbesserte energetische Effizienz sowie verringerte Betriebskosten auf.

Mit anderen Worten ist bevorzugt das Energiemanagementsystem zum Regeln oder Steuern des Energiesystems in Abhängigkeit des Prognosewertes ausgebildet.

Es ergeben sich zum erfindungsgemäßen Verfahren oder einer seiner Ausgestaltungen gleichartige und gleichwertige Vorteile des erfindungsgemäßen Energiemanagementsystems.

Besonders bevorzugt umfasst das Energiemanagementsystem eine oder mehrere Messvorrichtungen, insbesondere Sensoren, zum Erfassen der Werte der Eingangsgröße und/oder Ausgangsgröße.

In einer vorteilhaften Ausgestaltung der Erfindung wird als mathematisches Modell ein autoregressives exogenes Modell verwendet.

Autoregressive exogene Modelle, insbesondere ARMA(p,q)-Modelle (englisch: Autoregressive-Moving Average; abgekürzt ARMA), sind zeitdiskrete mathematische Modelle, die besonders für stochastische Prozesse und kurzfristige Prognosen vorteilhaft sind. Insbesondere sind diese zur Approximation von komplexen Prozessen, wie sie beispielsweise bei Energiesystemen vorliegen, vorteilhaft. Hierbei entspricht der Rauschterm des autoregressiven exogenen Modells dem Modellfehler.

Gemäß einer vorteilhaften Ausgestaltung der Erfindung erfolgt das Minimieren unter einer Berücksichtigung der Nebenbedingungen, dass die Summe der Werte der Binärvariablen kleiner als die Anzahl der Binärvariablen ist.

Dadurch wird vorteilhafterweise die Vermeidung der Überanpassung weiter verbessert.

In einer vorteilhaften Weiterbildung der Erfindung werden die Modellparameter auf ihre physikalischen Wertebereiche mittels einer oder mehrerer Nebenbedingungen eingeschränkt.

Dadurch wird vorteilhafterweise sichergestellt, dass keine nicht physikalisch sinnvollen Werte für die Modellparameter berechnet oder ermittelt werden. Insbesondere wird sichergestellt, dass der Prognosewert nicht auf nicht physikalischen Annahmen basiert. Beispielsweise ist es erforderlich, dass die Heizlast indirekt proportional zur Außentemperatur ist, das heißt, dass bei einer steigenden Außentemperatur typischerweise die Heizlast zu reduzieren ist. Durch die Beschränkung der Wertebereiche der Modellparameter kann vorteilhafterweise ein physikalisch sinnvolles Verhalten sichergestellt werden.

Gemäß einer vorteilhaften Weiterbildung der Erfindung wird das mathematische Modell durch

$$y_t = k_0 \varphi_0 + \sum_{j=1}^{p} k_j \varphi_j y_{t-j} + \sum_{j=0}^{s} k_{p+j+1} \beta_j x_{t-j} + \epsilon_t$$

festgelegt. Hierbei bezeichnet $\varphi_0, ..., \varphi_p$ sowie $\beta_0, ..., \beta_s$ die Modellparameter, $k_0, ..., k_{p+s+1}$ die Binärvariablen, $\varepsilon_t$ den Modellfehler, $x_t$ den Wert der Eingangsgröße am Prognosezeitpunkt, $x_{t-1}, ..., x_{t-s}$ den Wert der Eingangsgröße an den vergangenen Zeitpunkten, $y_t$ den Prognosewert der Ausgangsgröße am Prognosezeitpunkt, und $y_{t-1}, ..., y_{t-p}$ den Wert der Ausgangsgröße an den vergangenen Zeitpunkten.

Dadurch wird vorteilhafterweise ein lineares autoregressives exogenes Modell zum Ermitteln des Prognosewertes $y_t$ bereitgestellt. Hierbei kennzeichnet der Index t den Prognosezeitpunkt. Weiterhin können nichtlineare autoregressive exogene Modelle vorgesehen sein. Das lineare autoregressive exogene Modell ist dadurch gekennzeichnet, dass die Werte der Eingangsgröße mittels der Modellparameter sowie die Werte der Ausgangsgröße zu den vergangenen Zeitpunkten linear kombiniert werden, wobei sich durch diese Linearkombination der Prognosewert $y_t$ ergibt.

Die Binärvariablen sind mittels eines Produktes den Werten der Eingangsgröße (Terme der Form $k_{p+j+1}\beta_j x_{t-j}$) sowie den Werten der Ausgangsgröße (Terme der Form $k_j\varphi_j y_{t-j}$) zugeordnet. Weiterhin sind die Binärvariablen ebenfalls mittels einer Produktbildung mit den Modellparametern gekoppelt. Mit anderen Worten werden die Modellparameter, die Binärvariablen und die Werte der Eingangsgröße oder Ausgangsgröße mittels eines Produktes miteinander gekoppelt. Weist eine der Binärvariablen somit den Wert Null auf ($k_j = 0$ für wenigstens ein $j$), so trägt der mit dieser Binärvariablen gekoppelte Wert der Eingangsgröße oder Ausgangsgröße nicht zur Linearkombination und somit nicht zum mathematischen Modell bei.

Der Modellfehler ist mit $\varepsilon_t$ bezeichnet. Sein Wert kennzeichnet die Abweichung des linearen mathematischen Modells vom Prognosewert. Erfindungsgemäß werden die Werte der Modellparameter und die Werte der Binärvariablen derart mittels des Optimierungsverfahrens festgelegt, dass der Modellfehler möglichst klein wird (Minimieren des Modellfehlers) oder einen Wert unterhalb eines Schwellenwertes aufweist.

Gemäß einer vorteilhaften Ausgestaltung der Erfindung erfolgt das Minimieren des Modellfehlers durch

$$\min_{\substack{\varphi_0, ..., \varphi_p \\ \beta_0, ..., \beta_s \\ k_0, ..., k_{p+s+1}}} \sum_{t=1}^{T} \left| y_t - k_0 \varphi_0 - \sum_{j=1}^{p} k_j \varphi_j y_{t-j} - \sum_{j=0}^{s} k_{p+j+1} \beta_j x_{t-j} \right|^2$$

unter einer Berücksichtigung der Nebenbedingung $\sum_{j=0}^{p+s+1} k_j \le n$, wobei $n$ eine natürliche Zahl ist.

Vorteilhafterweise erfolgt dadurch das Minimieren des Modellfehlers mittels eines gemischt ganzzahligen quadratischen Optimierungsverfahrens. Mit anderen Worten wird die Summe des Modellfehlers im Quadrat über alle betrachteten Zeitpunkte bis zu einem maximalen Zeitpunkt $T$ minimiert.

Die Nebenbedingung stellt sicher, dass nicht alle Binärvariablen den Wert Eins aufweisen können. Dadurch wird die Vermeidung einer Überanpassung verbessert. Hierbei ist $n$ eine natürliche Zahl, die festgelegt sein kann und insbesondere kleiner gleich der Anzahl der Binärvariablen ist. Bevorzugt ist $n \le 20$, weiterhin bevorzugt ist $n \le 10$ und besonders bevorzugt ist $5 \le n \le 10$. Dadurch wird die Vermeidung einer Überanpassung weiter verbessert.

Besonders bevorzugt wird die natürliche Zahl $n$ derart ermittelt, dass für ihren Wert ein kleinster Modellfehler vorliegt.

Mit anderen Worten wird vorteilhafterweise die natürliche Zahl $n$, die der maximalen Anzahl der beitragenden Werte der Eingangsgröße und Ausgangsgröße entspricht, nicht manuell festgelegt, sondern mittels des Optimierungsverfahrens ermittelt oder bestimmt. Da typischerweise $n$ einen kleinen Wertebereich beziehungsweise eine kleine Wertemenge aufweist, besonders bevorzugt ist $n \in \{5,6,7,8,9,10\}$, kann für jeden Wert von $n$ bis zu einem maximalen Wert von $n$ ein minimaler Wert des Modellfehlers ermittelt werden. Es ergibt sich folglich gemäß der Anzahl der Werte von $n$ eine Mehrzahl von minimalen Modellfehlern (und zugehörigen mathematischen Modellen), wobei der Wert von $n$ durch den kleinsten der minimalen Modellfehler bestimmt ist. Hierbei kann der Wert von $n$ abhängig von der Anzahl der Werte der Eingangsgröße und der Anzahl der Werte der Ausgangsgröße sein.

Ergänzend oder alternativ kann $n$ stets um den Wert Eins erhöht werden, solange mindestens eine Verkleinerung des Modellfehlers um einen festgelegten Prozentwert, insbesondere um fünf Prozent, erfolgt.

In einer vorteilhaften Ausgestaltung der Erfindung erfolgt das Minimieren des Modellfehlers durch

$$\min_{\substack{\varphi_0,\dots,\varphi_p \\ \beta_0,\dots,\beta_s \\ k_0,\dots,k_{p+s+1}}} \sum_{t=1}^{T} z_t \left| y_t - k_0\varphi_0 - \sum_{j=1}^{p} k_j\varphi_j y_{t-j} - \sum_{j=0}^{s} k_{p+j+1}\beta_j x_{t-j} \right|^2$$

unter einer Berücksichtigung der Nebenbedingungen $\sum_{j=0}^{p+s+1} k_j \leq n$ und $\sum_{t=0}^{T} z_t \geq T - m$, wobei $n$ und $m$ natürliche Zahlen und $z_t$ eine weitere Binärvariable ist.

Vorteilhafterweise können dadurch Messabweichungen, die fehlerhafte Werte (Messfehler) der Eingangsgröße kennzeichnen, erkannt und eliminiert werden. Dadurch tragen diese zum Prognosewert nicht bei. Die erkannten Messfehler werden durch einen Wert der weiteren Binärvariablen $z_t$ von Null gekennzeichnet. Hierbei wählt das Optimierungsverfahren sinnbildlich automatisch die $m$ Werte der Eingangsgröße und/oder Ausgangsgröße aus, deren Elimination ($z_t = 0$) den Modellfehler verkleinert. Hierbei kann $m$ ein festgelegter Eingangswert des Optimierungsverfahrens, das heißt der Minimierung sein. Vorteilhafterweise ist, in Abhängigkeit der Anzahl der Werte der Eingangsgröße und der Anzahl der Werte der Ausgangsgröße, $m$ nicht größer als fünf Prozent von $T$ (maximaler Zeitpunkt).

Weiterhin ist es besonders vorteilhaft, wenn der Wert von $m$ vergleichbar zum Wert von $n$ ermittelt wird. Beispielsweise können hierzu weitere Nebenbedingungen vorgesehen sein. Diese stellen sicher, dass ein Wert der Eingangsgröße und/oder ein Wert der Ausgangsgröße dann eliminiert wird, das heißt nicht beiträgt, wenn er zu einer Vergrößerung des Modellfehlers führen würde. Wie groß der Modellfehler hierbei sein darf wird mittels eines weiteren Eingangswertes des Optimierungsverfahrens festgelegt, beispielsweise mittels einer oder mehrerer Standardabweichungen.

Mit anderen Worten ist es besonders von Vorteil, wenn die natürlichen Zahlen $m$ und $n$ beziehungsweise ihre Werte derart ermittelt werden, dass für ihre Werte ein kleinster Modellfehler vorliegt.

Gemäß einer vorteilhaften Ausgestaltung der Erfindung umfasst das Verfahren die weiteren Schritte:

- Erstellen eines Prognosemodells, das dem mathematischen Modell mit den durch das Minimieren ermittelten Werten der Modellparameter und der Binärvariablen entspricht; und
- Berechnen der Werte des Prognosemodells für die Zeitpunkte an denen $z_t$ den Wert Null aufweist.

Vorteilhafterweise können dadurch Messfehler, das heißt fehlerhafte Werte der Eingangsgröße und/oder Ausgangsgröße korrigiert werden. Hierbei wird in einem ersten Schritt der fehlerhafte Wert der Eingangsgröße beziehungsweise Ausgangsgröße durch die Bedingung $z_t = 0$ erkannt. In einem zweiten Schritt wird das Prognosemodell erstellt, wobei die fehlerhaften Werte nicht zum Prognosemodell beitragen. Das Prognosemodell wird mittels der ermittelten Werte der Modellparameter und mittels der ermittelten Werte der Binärvariablen erstellt und entspricht dem mathematischen Modell ausgewertet für die ermittelten Werte der Modellparameter und der Binärvariablen. Anschließend wird das Prognosemodell zur Berechnung des Wertes der Eingangsgröße und/oder Ausgangsgröße zum Zeitpunkt des Messfehlers verwendet. Mit anderen Worten wird das Prognosemodell an dem als Messfehler erkannten Zeitpunkt ausgewertet und der entsprechende Wert als Korrektur zurückgegeben. Der korrigierte Wert kann für weitere Berechnungen verwendet werden.

Weiterhin ist dieses Verfahren zur Erkennung und Korrektur von Messfehlern bei Datenanalyseverfahren vorteilhaft.

Bei Datenanalyseverfahren werden ebenfalls mathematische Modelle aus Messdaten gebildet und beispielsweise dazu verwendet, Fehler einer Anlage oder eines Anlagenbetriebes zu erkennen. Ein derartiges mathematisches Modell könnte für einen Wärmebedarf (Heizlast) eine Witterungsbereinigung durchführen. Dadurch wird vorteilhafterweise nur der von der Witterung nicht erklärbare Teil der Daten analysiert.

In einer vorteilhaften Weiterbildung der Erfindung wird eine Mehrzahl von Eingangsgrößen verwendet, und es werden die folgenden weiteren Schritte durchgeführt:

- Zuordnen von Binärvariablen zu jedem Wert jeder Eingangsgröße, wobei einer der Werte einer der Eingangsgrößen zum mathematischen Modell beiträgt, falls die zugeordnete Binärvariable den Wert Eins aufweist; und

- Ermitteln von ersten Werten der Binärvariablen mittels dem Minimieren des Modellfehlers für den Prognosezeitpunkt;
- Ermitteln von zweiten Werten der Binärvariablen mittels dem Minimieren des Modellfehlers für einen weiteren Prognosezeitpunkt; und
- Kennzeichnen eines Wertes einer der Eingangsgrößen als fehlerhaft, falls eine Änderung des Wertes der zugeordneten Binärvariable vom Prognosezeitpunkt zum weiteren Prognosezeitpunkt erfolgt.

Mit anderen Worten wird vorteilhafterweise durch eine Änderung der Werte der Binärvariablen sowohl ein fehlerhafter Wert (Messfehler) als auch ein fehlerhaftes Messgerät, das den Messfehler erfasst hat, erkannt. Hierzu wird die Änderung der Binärvariablen des Prognosemodells über die Zeit, das heißt für wenigstens zwei verschiedene Zeitpunkte ausgewertet. Dieses Vorgehen wird anhand des folgenden Beispiels verdeutlicht:

Zum Erfassen der Werte einer Außentemperatur (Eingangsgröße) sind beispielsweise mehrere Messgeräte, hier Außentemperatursensoren, vorgesehen. Insbesondere ein physikalisch sinnvoll angeordneter erster Außentemperatursensor (beispielsweise an einer Nordseite eines Gebäudes), ein zweiter Außentemperatursensor, der am Tag einer direkten Sonnenstrahlung ausgesetzt ist, sowie ein Strahlungssensor. Solange der physikalisch sinnvoll angeordnete erste Außentemperatursensor nicht beschädigt ist, wird die den Messwerten des ersten Außentemperatursensors zugeordneten Binärvariable den Wert Eins aufweisen. Für die den Messwerten des zweiten Außentemperatursensors zugeordnete Binärvariable sowie für die den Messwerten des Strahlungssensors zugeordnete Binärvariable wird der Wert Null ermittelt, da diese typischerweise den Modellfehler erhöhen. Mit anderen Worten werden der zweite Außentemperatursensor, der der direkten Sonnenstrahlung ausgesetzt ist, sowie der Strahlungssensor beim Ermitteln des Prognosewertes der Heizlast nicht berücksichtigt. Hierbei ist der Prognosewert die Heizlast zum Prognosezeitpunkt.

Wird der erste Außentemperatursensor beispielsweise beschädigt, sodass seine Messwerte (Werte der Eingangsgröße) fehlerhaft sind, so führt dies typischerweise zu einem größeren Modellfehler im Prognosemodell als dies für eine Berücksichtigung des zweiten Außentemperatursensors und des Strahlungssensors der Fall wäre. Mit anderen Worten werden automatisch beim Ermitteln des Prognosewertes die Binärvariablen derart angepasst, dass die den Werten des ersten Außentemperatursensors zugeordneten Binärvariablen nun den Wert Null aufweisen. Die den Messwerten des zweiten Außentemperatursensors und die den Messwerten des Strahlungssensors zugeordneten Binärvariablen weisen nun typischerweise den Wert Eins auf. Mit anderen Worten deutet eine Änderung der Werte der Binärvariablen auf ein fehlerhaftes Messgerät hin. Dadurch passt sich das Prognosemodell automatisch und möglichst optimal an neue Umstände, beispielsweise ein defektes Messgerät, an. Vorteilhafterweise wird dadurch der Wartungsaufwand für ein gemäß der vorliegenden Erfindung ausgestaltetes Energiemanagementsystem verringert. Weiterhin können vorteilhafterweise automatisierte Ferndiagnosen erfolgen.

Gemäß einer vorteilhaften Ausgestaltung der Erfindung wird als Eingangsgröße eine Außentemperatur, eine Sonneneinstrahlung, eine Windgeschwindigkeit, eine Luftfeuchte, eine Kohlenstoffdioxidkonzentration, eine Anzahl von Personen und/ oder eine weitere physikalische Größe verwendet.

Typischerweise korrespondiert eine Eingangsgröße zu einem Messgerät, welches Werte beziehungsweise Messwerte bereitstellt, die den Werten der Eingangsgröße entsprechen. Die Eingangsgröße ist eine physikalische Größe, die der Messgröße des Messgerätes entspricht. Beispielsweise wird durch einen Außentemperatursensor die Außentemperatur als Eingangsgröße erfasst. Die Messwerte der Außentemperatur entsprechen den Werten der Eingangsgröße.

In einer weiteren vorteilhaften Ausgestaltung der Erfindung wird als Ausgangsgröße eine Wärmelast, eine Kältelast, eine elektrische Last, eine maximale erzeugbare elektrische Leistung und/oder eine weitere Last und/oder eine weitere physikalische Größe verwendet.

Die Ausgangsgröße kann eine Messgröße eines Messgerätes sein. Die vergangenen Messwerte der Ausgangsgröße können den Messwerten des Messgerätes entsprechen.

Weitere Vorteile, Merkmale und Einzelheiten der Erfindung ergeben sich aus dem im Folgenden beschriebenen Ausführungsbeispiel sowie anhand der einzigen Zeichnung. Dabei zeigt die einzige Figur ein schematisiertes Flussdiagramm des erfindungsgemäßen Verfahrens.

In einem ersten Schritt des erfindungsgemäßen Verfahrens zum Ermitteln eines Prognosewertes einer zeitabhängigen Ausgangsgröße, insbesondere einer Last eines Energiesystems, insbesondere eines verteilten Energiesystems oder eines Gebäudes, für einen Prognosezeitpunkt, werden Werte der zeitabhängigen Ausgangsgröße für in Bezug auf den Prognosezeitpunkt vergangene beziehungsweise historische Zeitpunkte bereitgestellt. Mit anderen Worten ist die Ausgangsgröße eine physikalische Größe, die zu verschiedenen Zeitpunkten bestimmte Werte aufweist. Diese Werte werden bereitgestellt.

In einem zweiten Schritt des erfindungsgemäßen Verfahrens werden Werte wenigstens einer zeitabhängigen Eingangsgröße, insbesondere Werte einer externen zeitabhängigen Eingangsgröße, für den Prognosezeitpunkt oder für in Bezug auf den Prognosezeitpunkt vergangene beziehungsweise historische Zeitpunkte bereitgestellt. Insbesondere ist die Eingangsgröße durch eine Messgröße eines Messgerätes gegeben, wobei die Messwerte des Messgerätes zu den Werten der Eingangsgröße korrespondieren.

Die Werte der Eingangsgröße und der Ausgangsgröße können zu den genannten Zeitpunkten einen Datensatz oder Messdatensatz ausbilden.

In einem dritten Schritt des erfindungsgemäßen Verfahrens wird ein mathematisches Modell, insbesondere ein autoregressives exogenes Modell, bereitgestellt. Hierbei wird das mathematische Modell mittels einer Mehrzahl von Modellparametern, mittels der Eingangsgröße und/oder mittels der Ausgangsgröße, sowie mittels einer Mehrzahl von Binärvariablen gebildet. Weiterhin sind die Binärvariablen dadurch gekennzeichnet, dass den Werten der Eingangsgröße und den Werten der Ausgangsgröße jeweils eine der Binärvariablen derart zugeordnet wird, dass der zugehörige Wert der Eingangsgröße oder der zugehörige Wert der Ausgangsgröße zum mathematischen Modell beiträgt, falls die zugeordnete Binärvariable den Wert Eins aufweist. Mit anderen Worten tragen die Werte der Eingangsgröße und/oder die Werte der Ausgangsgröße bei, deren zugeordnete Binärvariable den Wert Eins aufweist. Dadurch wird vorteilhafterweise sichergestellt, dass nur Werte der Eingangsgröße und Werte der Ausgangsgröße zum mathematischen Modell beitragen, die einen wesentlichen Einfluss auf den Prognosewert aufweisen.

In einem vierten Schritt des erfindungsgemäßen Verfahrens wird der Modellfehler des mathematischen Modells, insbesondere des autoregressiven Modells, minimiert. Hierbei kann die Minimierung mittels eines nummerischen Optimierungsverfahrens erfolgen. Als Ergebnis des Minimierens liegt der Prognosewert der Ausgangsgröße vor, sowie die Werte der Modellparameter und die Werte der Binärvariablen. Mit anderen Worten werden mittels des Optimierungsverfahrens der Prognosewert, die Modellparameter und die Binärvariablen ermittelt. Sind die Binärvariablen ermittelt, so ist festgelegt, welche Werte der Eingangsgröße und/oder der Ausgangsgröße zum mathematischen Modell beitragen. Mit anderen Worten wird mittels der erfindungsgemäßen Minimierung des Modellfehlers ein Prognosemodell zum Ermitteln des Prognosewertes bereitgestellt. Hierbei ist das Prognosemodell dadurch gekennzeichnet, dass das mathematische Modell für die ermittelten Werte der Modellparameter und die ermittelten Werte der Binärvariablen ausgewertet wird.

Ein erfindungsgemäßes Energiemanagementsystem ist zur Durchführung eines erfindungsgemäßen Verfahrens und/oder einer seiner Ausgestaltungen ausgebildet. Hierbei wird der Prognosewert zum Regeln oder Steuern eines Energiesystems verwendet. Bevorzugt ist das Energiesystem ein Gebäude, insbesondere ein kommerzielles Gebäude. Das erfindungsgemäße Verfahren kann mehrmals an einem Tag, insbesondere jede Stunde, zum Ermitteln eines Prognosewertes einer Ausgangsgröße herangezogen oder durchgeführt werden.

Das erfindungsgemäße Energiemanagementsystem weist eine verbesserte Genauigkeit in Bezug auf die ermittelten Prognosewerte auf. Dadurch wird vorteilhafterweise ein verbessertes Energiemanagementsystem bereitgestellt, das auf zukünftige Werte der zeitabhängige Ausgangsgröße verbessert reagieren und agieren kann.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

**Patentansprüche**

1. Verfahren zum Ermitteln eines Prognosewertes einer zeitabhängigen Ausgangsgröße für einen Prognosezeitpunkt, insbesondere zur Regelung oder Steuerung eines Energiesystems, umfassend die Schritte:

   - Bereitstellen von Werten der zeitabhängigen Ausgangsgröße für in Bezug auf den Prognosezeitpunkt vergangene Zeitpunkte;
   - Bereitstellen von Werten wenigstens einer zeitabhängigen Eingangsgröße für den Prognosezeitpunkt und/oder für in Bezug auf den Prognosezeitpunkt vergangene Zeitpunkte;
   - Festlegen eines mathematischen Modells mittels einer Mehrzahl von Modellparametern, mittels der Eingangsgröße und/oder mittels der Ausgangsgröße, sowie mittels einer Mehrzahl von Binärvariablen; wobei
   - den Werten der Eingangsgröße und den Werten der Ausgangsgröße jeweils eine der Binärvariablen derart zugeordnet wird, dass der zugehörige Wert der Eingangsgröße oder der zugehörige Wert der Ausgangsgröße zum mathematischen Modell beiträgt, falls die zugeordnete Binärvariable den Wert Eins aufweist; und
   - Minimieren eines Modellfehlers des mathematischen Modells, wobei durch das Minimieren der Prognosewert der Ausgangsgröße berechnet, sowie die Werte der Modellparameter und die Werte der Binärvariablen ermittelt werden.

2. Verfahren gemäß Anspruch 1, bei dem als mathematisches Modell ein autoregressives exogenes Modell verwendet wird.

3. Verfahren gemäß Anspruch 1 oder 2, bei dem das Minimieren des Modellfehlers mittels eines numerischen Optimierungsverfahrens erfolgt.

4. Verfahren gemäß einem der vorhergehenden Ansprüche, bei dem das Minimieren unter einer Berücksichtigung der Nebenbedingung erfolgt, dass die Summe der Werte der Binärvariablen kleiner als die Anzahl der Binärvariablen ist.

5. Verfahren gemäß einem der vorhergehenden Ansprüche, bei dem die Modellparameter auf ihre physikalischen Wertebereiche mittels einer oder mehrerer Nebenbedingungen eingeschränkt werden.

6. Verfahren gemäß einem der vorhergehenden Ansprüche, bei dem das mathematische Modell durch

$$y_t = k_0\varphi_0 + \sum_{j=1}^{p} k_j\varphi_j y_{t-j} + \sum_{j=0}^{s} k_{p+j+1}\beta_j x_{t-j} + \epsilon_t$$

festgelegt wird; wobei

- $\varphi_0, \dots, \varphi_p$ sowie $\beta_0, \dots, \beta_s$ die Modellparameter; sowie
- $k_0, \dots, k_{p+s+1}$ die Binärvariablen;
- $\varepsilon_t$ den Modellfehler;
- $x_t$ den Wert der Eingangsgröße am Prognosezeitpunkt;
- $x_{t-1}, \dots, x_{t-s}$ den Wert der Eingangsgröße an den vergangenen Zeitpunkten;
- $y_t$ den Prognosewert der Ausgangsgröße am Prognosezeitpunkt; und
- $y_{t-1}, \dots, y_{t-p}$ den Wert der Ausgangsgröße an den vergangenen Zeitpunkten;

bezeichnet.

7. Verfahren gemäß Anspruch 6, bei dem das Minimieren des Modellfehlers durch

$$\min_{\substack{\varphi_0,\dots,\varphi_p \\ \beta_0,\dots,\beta_s \\ k_0,\dots,k_{p+s+1}}} \sum_{t=1}^{T} \left| y_t - k_0\varphi_0 - \sum_{j=1}^{p} k_j\varphi_j y_{t-j} - \sum_{j=0}^{s} k_{p+j+1}\beta_j x_{t-j} \right|^2$$

unter einer Berücksichtigung der Nebenbedingung $\sum_{j=0}^{p+s+1} k_j \leq n$ erfolgt, wobei $n$ eine natürliche Zahl ist.

8. Verfahren gemäß Anspruch 7, bei dem die natürliche Zahl $n$ derart ermittelt wird, dass für ihren Wert ein kleinster Modellfehler vorliegt.

9. Verfahren gemäß Anspruch 6, bei dem das Minimieren des Modellfehlers durch

$$\min_{\substack{\varphi_0,\dots,\varphi_p \\ \beta_0,\dots,\beta_s \\ k_0,\dots,k_{p+s+1}}} \sum_{t=1}^{T} z_t \left| y_t - k_0\varphi_0 - \sum_{j=1}^{p} k_j\varphi_j y_{t-j} - \sum_{j=0}^{s} k_{p+j+1}\beta_j x_{t-j} \right|^2$$

unter einer Berücksichtigung der Nebenbedingungen $\sum_{j=0}^{p+s+1} k_j \leq n$ und $\sum_{t=0}^{T} z_t \geq T - m$ erfolgt, wobei $n$ und $m$ natürliche Zahlen und $z_t$ eine weitere Binärvariablen ist.

10. Verfahren gemäß Anspruch 9, bei dem die natürlichen Zahlen $n$ und $m$ derart ermittelt werden, dass für ihre Werte ein kleinster Modellfehler vorliegt.

11. Verfahren gemäß Anspruch 9 oder 10, mit den weiteren Schritten:

- Erstellen eines Prognosemodells, das dem mathematischen Modell mit den durch das Minimieren ermittelten Werten der Modellparameter und der Binärvariablen entspricht; und
- Berechnen der Werte des Prognosemodells für die Zeitpunkte an denen $z_t$ den Wert Null aufweist.

12. Verfahren gemäß einem der vorhergehenden Ansprüche mit einer Mehrzahl von Eingangsgrößen, umfassend die weiteren Schritte:

- Zuordnen von Binärvariablen zu jedem Wert jeder Eingangsgröße, wobei einer der Werte einer der Eingangsgrößen zum mathematischen Modell beiträgt, falls die zugeordnete Binärvariable den Wert Eins aufweist; und
- Ermitteln von ersten Werten der Binärvariablen mittels dem Minimieren des Modellfehlers für den Prognosezeitpunkt;
- Ermitteln von zweiten Werten der Binärvariablen mittels dem Minimieren des Modellfehlers für einen weiteren Prognosezeitpunkt; und
- Kennzeichnen eines Wertes einer der Eingangsgrößen als fehlerhaft, falls eine Änderung des Wertes der zugeordneten Binärvariable vom Prognosezeitpunkt zum weiteren Prognosezeitpunkt erfolgt.

13. Verfahren gemäß einem der vorhergehenden Ansprüche, bei dem als Eingangsgröße eine Außentemperatur, eine Sonneneinstrahlung, eine Windgeschwindigkeit, eine Luftfeuchte, eine Kohlenstoffdioxidkonzentration, eine Anzahl von Personen und/oder eine weitere physikalische Größe verwendet wird.

14. Verfahren gemäß einem der vorhergehenden Ansprüche, bei dem als Ausgangsgröße eine Wärmelast, eine Kältelast, eine elektrische Last, eine maximal erzeugbare elektrische Leistung und/oder eine weitere Last und/oder eine weitere physikalische Größe verwendet wird.

15. Energiemanagementsystem, **dadurch gekennzeichnet, dass** dieses zum Ermitteln eines Prognosewertes einer zeitabhängigen Ausgangsgröße, insbesondere einer Last, eines Energiesystems, insbesondere eines Gebäudes, nach einem Verfahren gemäß einem der Ansprüche 1 bis 14 ausgebildet ist.

16. Energiemanagementsystem gemäß Anspruch 15, **dadurch gekennzeichnet, dass** dieses zum Regel oder Steuern des Energiesystems in Abhängigkeit des Prognosewertes ausgebildet ist.

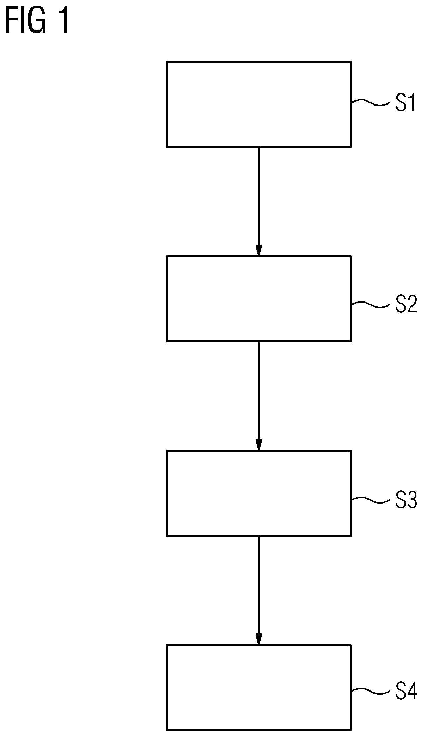

FIG 1

**Europäisches Patentamt**
**European Patent Office**
**Office européen des brevets**

# EUROPÄISCHER RECHERCHENBERICHT

Nummer der Anmeldung

EP 18 15 5284

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/025685 A1 (IBEX PROCESS TECHNOLOGY INC [US]) 27. März 2003 (2003-03-27) * Absatz [0043] - Absatz [0049] * ----- | 1-12 | INV. G05B13/04 |
| A | US 2015/341211 A1 (SAHA VIVEK [IN] ET AL) 26. November 2015 (2015-11-26) * Absatz [0032] * * Absatz [0049] - Absatz [0051] * ----- | 1,15 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| Den Haag | 28. Juni 2018 | Kelperis, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 15 5284

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2018

| Im Recherchenbericht angeführtes Patentdokument | Datum der Veröffentlichung | Mitglied(er) der Patentfamilie | Datum der Veröffentlichung |
|---|---|---|---|
| WO 03025685 A1 | 27-03-2003 | US 2003083757 A1<br>WO 03025685 A1 | 01-05-2003<br>27-03-2003 |
| US 2015341211 A1 | 26-11-2015 | AU 2015201889 A1<br>US 2015341211 A1 | 10-12-2015<br>26-11-2015 |

Für nähere Einzelheiten zu diesem Anhang : siehe Amtsblatt des Europäischen Patentamts, Nr.12/82